Europäisches Patentamt

European Patent Office

Office européen des brevets

(11) Publication number: **0 572 676 A1**

## EUROPEAN PATENT APPLICATION
### published in accordance with Art. 158(3) EPC

(21) Application number: 93900346.3

(22) Date of filing: **17.12.92**

(86) International application number:
**PCT/JP92/01641**

(87) International publication number:
**WO 93/12176 (24.06.93 93/15)**

(51) Int. Cl.⁵: **C08L 21/00**, C08L 61/18, F16F 7/00

(30) Priority: **18.12.91 JP 353600/91**
**29.07.92 JP 222143/92**

(43) Date of publication of application:
**08.12.93 Bulletin 93/49**

(84) Designated Contracting States:
**AT BE CH DE DK ES FR GB GR IE IT LI LU MC NL PT SE**

(71) Applicant: **GENERAL PETROCHEMICAL INDUSTRIES LTD.**
**8-6, Nishishinbashi 2-chome**
**Minato-ku, Tokyo 105(JP)**

(72) Inventor: **SAKAI, Isagi, Kawasaki Factory of General**
**Petrochemical Ind. Ltd.,**
**6-1, Ukishima-cho**
**Kawasaki-ku, Kawasaki-shi, Kanagawa 210(JP)**
Inventor: **KIMURA, Masatoshi, Kawasaki Factory of General**
**Petrochemical Ind. Ltd.,**
**6-1, Ukishima-cho**
**Kawasaki-ku, Kawasaki-shi, Kanagawa 210(JP)**
Inventor: **MAITA, Masahiro, The Central Laboratory of General**
**Sekiyu K.K.,**
**6-1, Ukishima-cho,**
**Kawasaki-ku**
**Kawasaki-shi, Kanagawa 210(JP)**
Inventor: **SATOH, Kazushige The Central Laboratory of General**
**Sekiyu K.K.,**
**6-1, Ukishima-cho,**
**Kawasaki-ku**
**Kawasaki-shi, Kanagawa 210(JP)**

(74) Representative: **Hansen, Bernd, Dr.**
**Dipl.-Chem. et al**
**Hoffmann, Eitle & Partner**
**Patent- und Rechtsanwälte,**
**Postfach 81 04 20**
**D-81904 München (DE)**

(54) **HIGH-LOSS RUBBER COMPOSITION CONTAINING AROMATIC HYDROCARBON/FORMALDEHYDE RESIN.**

(57) A high-loss rubber composition comprising a rubber component and an aromatic hydrocarbon/formaldehyde resin with a number-average molecular weight of 250 to 700. It maintains characteristics useful for a rubber composition, such as tensile strength, elongation, rebound resilience and permanent compression set, and has a high loss factor and high damping performance. Therefore it is suitable for relieving or absorbing vibrational energy, for example, insulating the vibration of various machines and proofing against earthquakes.

## TECHNICAL FIELD

This invention relates to a high-hysteresis loss rubber composition containing an aromatic hydrocarbon-formaldehyde resin. More particularly, it relates to a rubber composition having a high damping property which is suitable for use in a device for reducing the transmission of vibrational energy, or absorbing it, as for absorbing or damping the vibration of any of various kinds of machines, or relieving or removing any vibration caused by an earthquake.

## BACKGROUND ART

There have hitherto been proposed a number of methods for imparting a high hysteresis-loss property to a rubber material, or obtaining a rubber composition exhibiting a high hysteresis-loss property after vulcanization, including:

(1) Adding a large amount of carbon black;

(2) Using a polymer having a high glass-transition temperature; and

(3) Adding a large amount of a softening agent.

The addition of a large amount of carbon black, however, brings about a reduction in elongation, which is another important property, though it gives a high hysteresis after vulcanization. The use of a polymer having a high glass-transition temperature has the drawback of giving a high modulus in a low or working temperature range and a low elongation at rupture, after vulcanization. The addition of a large amount of a softening agent has the drawback of bringing about a serious lowering in breaking strength and setting resistance after vulcanization, though it gives a high hysteresis loss and a high elongation at rupture.

Under these circumstances, this invention has been made to overcome the drawbacks of the prior art as hereinabove pointed out.

## DISCLOSURE OF THE INVENTION

It is an object of this invention to provide a rubber composition which is excellent in useful properties including elongation and strength, and also has a high hysteresis-loss property.

It is another object of this invention to achieve a shortened vulcanization time and thereby an improved productivity.

The above objects of this invention are attained by adding a specific aromatic hydrocarbon-formaldehyde resin to a rubber component.

Thus, this invention relates to a high-hysteresis loss rubber composition which comprises a rubber component and an aromatic hydrocarbon-formaldehyde resin (hereinafter-referred to as "AHCF resin") having a number-average molecular weight of 250 to 700.

The rubber component in the rubber composition of this invention may be any natural, semisynthetic, or synthetic rubber, but is preferably a synthetic rubber having a high polarity, or solubility parameter (SP value). Examples of the synthetic rubbers having a high polarity include acrylonitrile-butadiene rubber (NBR), urethane rubber, chloroprene rubber (CR), acrylic rubber, and halogenated butyl rubber.

The rubber component which is used for the purpose of this invention may also be a mixture of a synthetic rubber of high polarity and another rubber component, such as synthetic rubber which is compatible with natural rubber, or rubber of high polarity (e.g. EPDM or SBR), oil which is compatible with an AHCF resin, such as DOP or process oil, or polyvinyl chloride (PVC).

In the context of this disclosure, the AHCF resin means an oligomer or polymer which can be obtained by the reaction of an aromatic hydrocarbon and an aldehyde compound. A typical example thereof is an oxygen-containing oligomer obtained by the condensation reaction of an aromatic hydrocarbon, preferably an alkyl-substituted aromatic hydrocarbon having 7 to 10 carbon atoms, more specifically an aromatic hydrocarbon having at least one alkyl group, such as toluene, ethylbenzene, o-, m- or p-xylene, mesitylene, pseudocumene or naphthalene, or a mixture of two or more such hydrocarbons, and an aldehyde compound such as paraformaldehyde or formaldehyde, at a temperature of, say, 70°C to 150°C in the presence of an acid catalyst such as sulfuric or formic acid.

The AHCF resin may also be a resin modified with amine, phenol or carboxylic acid, or a mixture of a modified resin and an unmodified one.

The AHCF resin has a structure formed by the aromatic hydrocarbon molecules bonded by a methylene, methylene ether, or acetal group, and may further contain a methylol group in its nucleus. The groups involved, the number of the bonds thereby formed, etc. depend on the conditions employed for preparing the resin. The resin is usually a liquid, or semisolid.

The AHCF resin having the physical properties as defined below is preferred:

Number-average molecular weight: 250 to 700, more preferably 450 to 600;
Weight-average molecular weight: 350 to 1500, more preferably 800 to 1300;
Oxygen content (% by weight): 5.0 to 15.0, more preferably 8 to 15, still more preferably 8 to 12;
Density at 15 ° C (g/cm$^3$): 1.01 to 1.10, more preferably 1.03 to 1.07;
Viscosity at 20 ° C (cP) : 15 to 150,000, more preferably 1400 to 65,000, still more preferably 10,000 to 65,000.

The amount of the AHCF resin to be added depends on the rubber component employed, or its composition. If, for example, a large amount of a filler is used, it is necessary to use a larger amount of AHCF resin, since the resin is adsorbed by the filler. The resin is, however, usually employed in the amount of about 10 to 300, preferably about 50 to 200, parts by weight with 100 parts by weight of rubber component.

The high-hysteresis loss rubber composition of this invention may further contain any of various kinds of common additives including a vulcanizing agent and a filler. These additives may be added during the manufacture of the rubber composition, or thereafter.

Examples of the filler are carbon black, silica, calcium carbonate, mica, a fine powder of quartz, diatomaceous earth, zinc white, basic magnesium carbonate, aluminum silicate, aluminum metasilicate, titanium dioxide, talc, aluminum sulfate, calcium sulfate, barium sulfate, asbestos, glass fiber, an organic reinforcing agent, an organic filler, and a magnetic powder, such as of ferrite, samarium or neodymium.

Examples of the vulcanizing agent are sulfur, an organic sulfur compound, a metal oxide or peroxide, a polyamine, and an organic peroxide.

The high-hysteresis loss rubber composition of this invention can be manufactured by, for example, mixing the above materials in an appropriate ratio in a mixer, and forming their mixture into a sheet. The rubber composition of low impact resilience obtained in sheet form is shaped, and vulcanized to make a product having a particular shape.

The high-hysteresis loss rubber composition of this invention has the advantages which will be set forth below, owing to its constituent features as hereinabove described in detail.

Even if a large amount of aromatic hydrocarbon-formaldehyde resin is added to the rubber component, it is possible to obtain a high coefficient of hysteresis loss without the sacrifice of the other useful properties of the rubber composition including tensile strength, elongation, impact resilience and compression set. The rubber composition of this invention, therefore, has a high damping property which makes it suitable for use in a device for reducing the transmission of vibrational energy, or absorbing it, as for absorbing or damping the vibration of any of various kinds of machines, or relieving or removing any vibration caused by an earthquake, and is of excellent fatigue resistance.

Moreover, the rubber composition of this invention can be vulcanized in a short time, and thereby contributes greatly to improved productivity.

BRIEF DESCRIPTION OF THE DRAWINGS

Figure 1 is a graph showing the tensile strength of rubber compositions made by adding an AHCF resin or DOP to NBR;

Figure 2 is a graph showing the elongation of the rubber compositions made by adding an AHCF resin or DOP to NBR;

Figure 3 is a graph showing the impact resilience of the rubber compositions made by adding an AHCF resin or DOP to NBR;

Figure 4 is a graph showing the compression set of the rubber compositions made by adding an AHCF resin or DOP to NBR;

Figure 5 is a graph showing the loss factor (tan δ) of a conventional high-damping material prepared from chlorinated butyl rubber and its level contemplated as a target for development;

Figure 6 is a graph showing the loss factors (tan δ) of rubber compositions prepared by adding an AHCF resin or process oil to chlorinated butyl rubber;

Figure 7 is a graph showing the impact resilience of rubber compositions prepared by adding an AHCF resin or process oil to chlorinated butyl rubber;

Figure 8 is a graph showing the vulcanizing time of the rubber compositions prepared by adding an AHCF resin or process oil to chlorinated butyl rubber, in relation to torque;

Figure 9 is a graph showing the impact resilience of rubber compositions prepared by adding an AHCF resin or DOP to a mixture of NBR and PVC; and

Figure 10 is a graph showing the impact resilience of rubber compositions prepared by adding an AHCF resin or DOP to CR.

The "phr" appearing in the drawings to indicate the amount of the AHCF resin, or another softening agent as added means parts (by weight) for 100 parts by weight of rubber component.

BEST MODE OF CARRYING OUT THE INVENTION

Description will now be made of the utility of the high-hysteresis loss rubber composition of this invention with reference to examples which are not intended for limiting the scope of this invention.

In the following description, "parts" means "parts by weight".

The AHCF resins of this invention employed in the examples are AHCF resins a and b having the properties shown in Table 1 below.

Table 1

|  | AHCF resin a ( GENELITE 4050 *) | AHCF resin b ( GENELITE 4150 *) |
|---|---|---|
| Appearance | Like a light yellow starch syrup | Like a light yellow starch syrup |
| Viscosity (cP, 20°C) | 13900 | 64200 |
| Number-average molecular weight | 485 | 592 |
| Weight-average molecular weight | 890 | 1203 |
| Oxygen content (% by weight) | 8.6 | 10.3 |
| Density (g/cm$^3$, 15°C) | 1.0372 | 1.0618 |

* Tradenames of General Petrochemical Industrial Co., Ltd.

Example 1 (Table 2: Examples 1-1 to 1-5):

The AHCF resin a, and other additives were added to NBR in the proportions shown in Table 2, and they were mixed in a mixer to prepare a composition. The composition was molded into a sheet, and vulcanized to make a molded high-hysteresis loss rubber product. The physical properties thereof were examined in accordance with JIS K 6301.

Comparative Example 1 (Table 2: Comparative Examples 1-1 to 1-6):

Example 1 was repeated, except that di-2-ethylhexyl phthalate (DOP) was employed instead of the AHCF resin a.

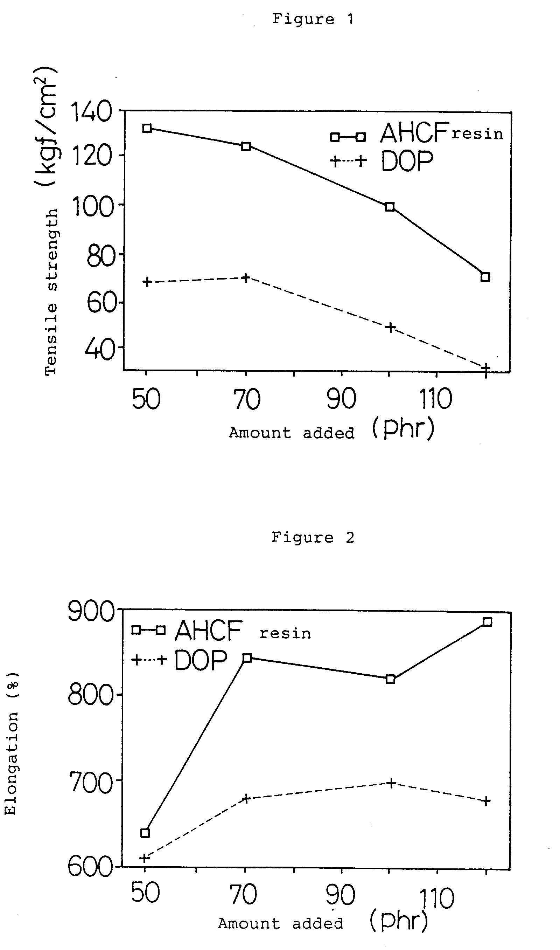

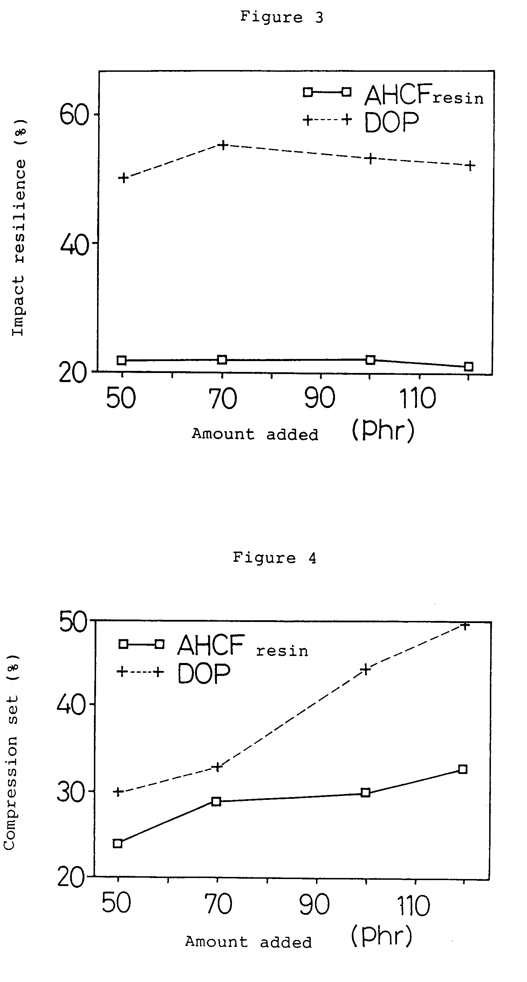

The test results obtained in Example 1 and Comparative Example 1, as well as the vulcanizing conditions employed, are shown in Table 2. Figures 1 to 4 are graphs showing the tensile strength, elongation, impact resilience and compression set, respectively, of the compositions in relation to the amount of the softening agent (AHCF resin a, or DOP) added. The compression set is an index of fatigue resistance, and the smaller its value, the higher fatigue resistance it represents. A smaller value of impact resilience is also desirable from the standpoint of vibration damping, etc.

It is obvious from the results shown in Table 2 and Figures 1 to 4 that the rubber composition prepared by adding the AHCF resin as the softening agent to NBR has a high tensile strength, an improved elongation, and low levels of impact resilience and compression set, as

4

**Table 2**

| | Example | | | | | Comparative Example | | | | | |
|---|---|---|---|---|---|---|---|---|---|---|---|
| | 1-1 | 1-2 | 1-3 | 1-4 | 1-5 | 1-1 | 1-2 | 1-3 | 1-4 | 1-5 | 1-6 |
| **Composition (parts by weight)** | | | | | | | | | | | |
| NBR [*1] | 100 | 100 | 100 | 100 | 100 | 100 | 100 | 100 | 100 | 100 | 100 |
| Silica filler [*2] | 40 | 40 | 40 | 40 | 40 | 40 | 40 | 40 | 40 | 40 | 40 |
| Zinc white | 5 | 5 | 5 | 5 | 5 | 5 | 5 | 5 | 5 | 5 | 5 |
| Stearic acid | 1 | 1 | 1 | 1 | 1 | 1 | 1 | 1 | 1 | 1 | 1 |
| Sulfur | 3 | 3 | 3 | 3 | 3 | 3 | 3 | 3 | 3 | 3 | 3 |
| Vulcanization accelerator a [*3] | 1 | 1 | 1 | 1 | 1 | 1 | 1 | 1 | 1 | 1 | 1 |
| Vulcanization accelerator b [*4] | 0.5 | 0.5 | 0.5 | 0.5 | 0.5 | 0.5 | 0.5 | 0.5 | 0.5 | 0.5 | 0.5 |
| Aging inhibitor [*5] | 1 | 1 | 1 | 1 | 1 | 1 | 1 | 1 | 1 | 1 | 1 |
| AHCF resin a | 20 | 50 | 70 | 100 | 120 | - | - | - | - | - | - |
| DOP | - | - | - | - | - | 0 | 20 | 50 | 70 | 100 | 120 |
| **Vulcanizing conditions and properties** | | | | | | | | | | | |
| Vulcanizing temp.(°C) | 150 | 150 | 150 | 150 | 150 | 150 | 150 | 150 | 150 | 150 | 150 |
| Vulcanizing time (min.) | 30 | 30 | 30 | 30 | 30 | 20 | 20 | 20 | 20 | 20 | 20 |
| Hardness (JIS A) | 63 | 56 | 43 | 36 | 28 | 73 | 62 | 46 | 37 | 27 | 23 |
| Tensile strength (kgf/cm²) | 95 | 132 | 124 | 100 | 72 | 114 | 80 | 69 | 71 | 50 | 33 |
| Elongation (%) | 440 | 640 | 845 | 820 | 890 | 320 | 400 | 610 | 680 | 700 | 680 |
| 300% modulus (kgf/cm²) | 56 | 39 | 19 | 15 | 10 | 100 | 56 | 29 | 22 | 14 | 11 |
| 200% modulus(kgf/cm²) | 40 | 27 | 13 | 9 | 7 | 69 | 39 | 21 | 14 | 9 | 7 |
| 100% modulus(kgf/cm²) | 21 | 15 | 8 | 6 | 4 | 37 | 21 | 11 | 8 | 5 | 4 |
| Tear strength (kgf/cm) | 35 | 31 | 24 | 17 | 14 | 47 | 34 | 22 | 18 | 15 | 12 |
| Impact resilience (%) | 32 | 22 | 22 | 22 | 21 | 33 | 46 | 50 | 55 | 53 | 52 |
| Compression set (%) [*6] | 32 | 24 | 29 | 30 | 33 | 29 | 32 | 30 | 33 | 44 | 50 |

*1 Product of Nippon Zeon Co., Ltd., Product name: Nipol 1042B
*2 Product of Mizusawa Chemical Industry Co., Ltd., Product name: SyltonR-2
*3 Product of Kawaguchi Chemical Industry Co., Ltd., Product name: MBTS
*4 Product of Kawaguchi Chemical Industry Co., Ltd., Product name: TMTM
*5 Product of Ouchi Sinko Chemical Industry Co., Ltd., Product name: NBC
*6 Test conditions: 100°C, 25% for 22 hours

compared with the rubber composition not containing any AHCF resin, or containing DOP instead. This confirms the excellent properties of the rubber composition of this invention.

Example 2 (Table 3: Examples 2-1 to 2-10):

The AHCF resin a or b, and other additives were added to chlorinated butyl rubber in the propertions shown in Table 3, and they were mixed in a mixer to prepare a composition. The composition was molded into a sheet, and vulcanized to make a molded high-hysteresis loss rubber product. The physical properties thereof were examined in accordance with JIS K 6301.

Comparative Example 2 (Table 3: Comparative Examples 2-1 to 2-6):

Example 2 was repeated, except that process oil was employed instead of the AHCF resin.

The test results obtained in Example 2 and Comparative Example 2, as well as the vulcanizing conditions employed, are shown in Table 3.

Table 3

| | Example | | | | | | | | | | Comparative Example | | | | | |
|---|---|---|---|---|---|---|---|---|---|---|---|---|---|---|---|---|
| | 2-1 | 2-2 | 2-3 | 2-4 | 2-5 | 2-6 | 2-7 | 2-8 | 2-9 | 2-10 | 2-1 | 2-2 | 2-3 | 2-4 | 2-5 | 2-6 |
| Composition (parts by weight) | | | | | | | | | | | | | | | | |
| Chlorinated butyl rubber [*1] | 100 | 100 | 100 | 100 | 100 | 100 | 100 | 100 | 100 | 100 | 100 | 100 | 100 | 100 | 100 | 100 |
| Carbon black a [*2] | 40 | 40 | 40 | 40 | 40 | 40 | 40 | 40 | 40 | 40 | 40 | 40 | 40 | 40 | 40 | 40 |
| Carbon black b [*3] | 15 | 15 | 15 | 15 | 15 | 15 | 15 | 15 | 15 | 15 | 15 | 15 | 15 | 15 | 15 | 15 |
| Zinc white | 5 | 5 | 5 | 5 | 5 | 5 | 5 | 5 | 5 | 5 | 5 | 5 | 5 | 5 | 5 | 5 |
| Magnesium oxide | 0.25 | 0.25 | 0.25 | 0.25 | 0.25 | 0.25 | 0.25 | 0.25 | 0.25 | 0.25 | 0.25 | 0.25 | 0.25 | 0.25 | 0.25 | 0.25 |
| Stearic acid | 1 | 1 | 1 | 1 | 1 | 1 | 1 | 1 | 1 | 1 | 1 | 1 | 1 | 1 | 1 | 1 |
| Accelerator [*4] | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| AHCF resin a | 10 | 20 | 30 | 40 | 50 | - | - | - | - | - | - | - | - | - | - | - |
| AHCF resin b | - | - | - | - | - | 10 | 20 | 30 | 40 | 50 | - | - | - | - | - | - |
| Process oil [*5] | - | - | - | - | - | - | - | - | - | - | - | 10 | 20 | 30 | 40 | 50 |
| Vulcanizing conditions and properties | | | | | | | | | | | | | | | | |
| Vulcanizing temp.(°C) | 160 | 160 | 160 | 160 | 160 | 160 | 160 | 160 | 160 | 160 | 160 | 160 | 160 | 160 | 160 | * |
| Vulcanizing time (min.) | 10 | 10 | 10 | 6 | 6 | 15 | 15 | 10 | 10 | 10 | 20 | 20 | 20 | 20 | 25 | * |
| Hardness (JIS A) | 42 | 37 | 32 | 29 | 21 | 47 | 43 | 36 | 30 | 22 | 56 | 51 | 42 | 35 | 25 | * |
| Tensile strength (kgf/cm²) | 140 | 131 | 115 | 99 | 82 | 133 | 133 | 120 | 100 | 85 | 183 | 163 | 143 | 121 | 104 | * |
| Elongation (%) | 840 | 860 | 970 | 1100 | 1200 | 880 | 940 | 1000 | 1100 | 1100 | 360 | 460 | 530 | 560 | 610 | * |
| 300% modulus (kgf/cm²) | 32 | 26 | 18 | 10 | 7 | 28 | 22 | 16 | 10 | 8 | 147 | 91 | 63 | 46 | 30 | * |
| 200% modulus(kgf/cm²) | 16 | 13 | 9 | 6 | 5 | 15 | 12 | 9 | 6 | 5 | 75 | 44 | 30 | 21 | 14 | * |
| 100% modulus(kgf/cm²) | 8 | 7 | 5 | 4 | 3 | 8 | 7 | 5 | 4 | 3 | 22 | 14 | 10 | 8 | 5 | * |
| Tear strength (kgf/cm) | 34 | 35 | 30 | 23 | 19 | 37 | 34 | 29 | 24 | 21 | 26 | 27 | 25 | 21 | 24 | * |
| Impact resilience (%) | 11 | 10 | 7 | 6 | 2 | 15 | 8 | 7 | 5 | 4 | 14 | 18 | 22 | 25 | 26 | * |
| Compression set (%) [*6] | 12 | 9 | 13 | 23 | 31 | 8 | 7 | 14 | 17 | 23 | 7 | 5 | 6 | 7 | 7 | * |

*1     Product of Japan Synthetic Rubber Co., Ltd., Product name: JSR CL-IIR1068

*2     Product of TOKAI CARBON CO., LTD., Product name: HAF-LS

*3     Product of Ashahi Carbon Co., Ltd., Product name: FT

*4     Product of Ouchi Sinko Chemical Industreis Ltd., Product name: EZ

*5     Product of Kyodo Oil Co., Ltd., Product name: P-300

*6     Test conditions: 70°C, 25% for 22 hours

In Comparative Example 2-6, it was impossible to prepare any composition by blending 50 parts of process oil, and conduct tests on physical properties.

EP 0 572 676 A1

Table 4

| | Example | | | Comparative Example | | | |
|---|---|---|---|---|---|---|---|
| | 3-1 | 3-2 | 3-3 | 3-1 | 3-2 | 3-3 | 3-4 |
| **Composition (parts by weight)** | | | | | | | |
| NBR/PVC [*1] | 100 | 100 | 100 | 100 | 100 | 100 | 100 |
| Silica filler [*2] | 40 | 40 | 40 | 40 | 40 | 40 | 40 |
| Zinc white | 3 | 3 | 3 | 3 | 3 | 3 | 3 |
| Stearic acid | 1 | 1 | 1 | 1 | 1 | 1 | 1 |
| Sulfur | 0.5 | 0.5 | 0.5 | 0.5 | 0.5 | 0.5 | 0.5 |
| Vulcanization accelerator a [*3] | 1.5 | 1.5 | 1.5 | 1.5 | 1.5 | 1.5 | 1.5 |
| Vulcanization accelerator b [*4] | 1.5 | 1.5 | 1.5 | 1.5 | 1.5 | 1.5 | 1.5 |
| AHCF resin a | 20 | 50 | 70 | - | - | - | - |
| DOP | - | - | - | 0 | 20 | 50 | 70 |
| **Vulcanizing conditions and properties** | | | | | | | |
| Vulcanizing temp.(°C) | 160 | 160 | 160 | 160 | 160 | 160 | 160 |
| Vulcanizing time (min.) | 8 | 8 | 8 | 10 | 6 | 6 | 6 |
| Hardness (JIS A) | 75 | 60 | 52 | 87 | 68 | 51 | 40 |
| Tensile strength (kgf/cm$^2$) | 133 | 107 | 90 | 153 | 117 | 91 | 71 |
| Elongation (%) | 640 | 778 | 855 | 520 | 645 | 785 | 840 |
| 300% modulus (kgf/cm$^2$) | 61 | 34 | 24 | 100 | 55 | 30 | 21 |
| 200% modulus(kgf/cm$^2$) | 49 | 26 | 17 | 85 | 44 | 22 | 16 |
| 100% modulus(kgf/cm$^2$) | 35 | 15 | 10 | 62 | 28 | 12 | 8 |
| Tear strength (kgf/cm) | 46 | 32 | 25 | 63 | 42 | 28 | 23 |
| Impact resilience (%) | 6 | 6 | 6 | 9 | 16 | 34 | 40 |
| Compression set (%) [*5] | 45 | 55 | 58 | 41 | 47 | 55 | 62 |

*1 Product of Nippon Zeon Co., Ltd., Product name: Nipol 1203JN
*2 Product of Mizusawa Chemical Industry Co., Ltd., Product name: SyltonR-2
*3 Product of Kawaguchi Chemical Industry Co., Ltd., Product name: TT
*4 Product of Kawaguchi Chemical Industry Co., Ltd., Product name: CZ
*5 Test conditions: 100°C, 25% for 22 hours

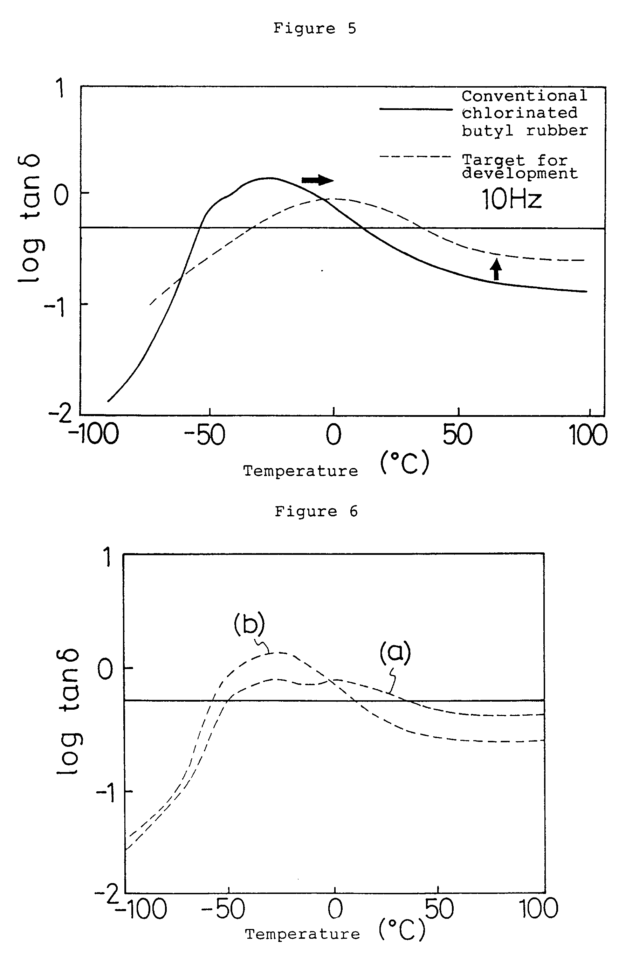

  A high-damping material, such as chlorinated butyl rubber, generally has a high temperature dependence of loss factor, modulus, etc., and has, therefore, the drawback of being suitable for use only in a narrow range of temperatures. Referring to Figure 5, for example, the conventional chlorinated butyl rubber has had a high loss factor of 0.5 or above only in a narrow and low temperature range (as shown by a solid line in the graph), and it has, therefore, been a target to develop a material exhibiting a high loss factor in a wider and higher temperature range (as shown by a broken line) [Journal of the Japan Rubber Association, Vol. 64, No. 12 (1991), page 777]. This invention has made it possible to attain the above target by adding the AHCF resin, as is obvious from Figure 6 (see (a): Example 2-7). Curve (b) in Figure 6 shows the result obtained in Comparative Example 2-3 by adding process oil, which is comparable to the result shown in Figure 5 as obtained from the conventional material. The loss factor (tan $\delta$) was determined by a viscoelastometer (Rheometrix RDAII).

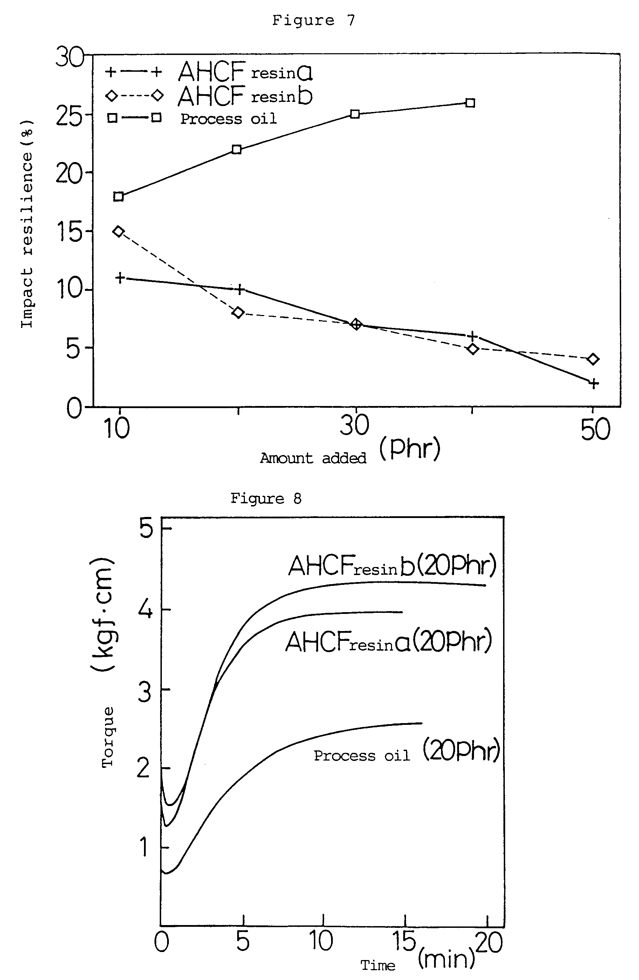

  Figure 7 is a graph showing the impact resilience of rubber compositions in relation to the amount of the AHCF resin, or process oil added. It confirms the improved performance of the compositions of this invention containing the AHCF resins which showed a reduction of impact resilience with an increase of their AHCF resin contents.

  Moreover, Table 3 shows that the rubber compositions of this invention containing the AHCF resins could be vulcanized in a shorter time than those of the Comparative Examples. This result is also obvious from Figure 8 showing the change of torque as observed with the passage of time for the vulcanization of the rubber compositions comprising chlorinated butyl rubber and an AHCF resin or process oil [which torque was measured by employing a CURELASTOMETER (Model JSRIII)]. Thus, the rubber composition of this invention contributes greatly to achieving an improved productivity owing to its shortened vulcanizing time.

Example 3 (Table 4: Examples 3-1 to 3-3):

The AHCF resin a and other additives were added to a mixture of NBR and PVC in the proportions shown in Table 4, and they were mixed in a mixer to prepare a composition. The composition was formed into a sheet, and vulcanized to make a molded high-hysteresis loss rubber product. The physical properties thereof were examined in accordance with JIS K 6301.

Comparative Example 3 (Table 4: Comparative Examples 3-1 to 3-4):

Example 3 was repeated, except that DOP was substituted for the AHCF resin a.

Table 5

|  | Example | | Comparative Example | |
|---|---|---|---|---|
|  | 4-1 | 4-2 | 4-1 | 4-2 |
| Composition (parts by weight) |  |  |  |  |
| CR *1 | 100 | 100 | 100 | 100 |
| Silica filler *2 | 40 | 40 | 40 | 40 |
| Zinc white | 5 | 5 | 5 | 5 |
| Stearic acid | 0.5 | 0.5 | 0.5 | 0.5 |
| Magnesium oxide | 4 | 4 | 4 | 4 |
| Accelerator *3 | 2 | 2 | 2 | 2 |
| AHCF resin a | 20 | 40 | - | - |
| DOP | - | - | 20 | 40 |
| Vulcanizing conditions and properties |  |  |  |  |
| Vulcanizing temp.(°C) | 160 | 160 | 160 | 160 |
| Vulcanizing time (min.) | 40 | 40 | 40 | 40 |
| Hardness (JIS A) | 70 | 55 | 70 | 55 |
| Tensile strength (kgf/cm$^2$) | 241 | 198 | 205 | 159 |
| Elongation (%) | 670 | 735 | 645 | 655 |
| 300% modulus (kgf/cm$^2$) | 44 | 29 | 44 | 31 |
| 200% modulus(kgf/cm$^2$) | 31 | 20 | 31 | 22 |
| 100% modulus(kgf/cm$^2$) | 20 | 12 | 20 | 15 |
| Tear strength (kgf/cm) | 43 | 35 | 39 | 32 |
| Impact resilience (%) | 53 | 47 | 59 | 61 |
| Compression set (%) **4 | 42 | 47 | 42 | 47 |

*1     Product of Denki Kagaku Kogyo K.K.., Product name: DENKA M-40
*2     Product of Nippon Silica Industry Co., Ltd., Product name: VN-3
*3     Product of Ouchi Shinko Chemical Industry Co., Ltd., Product name: TMU
*4     Test conditions: 100°C, 25% for 22 hours

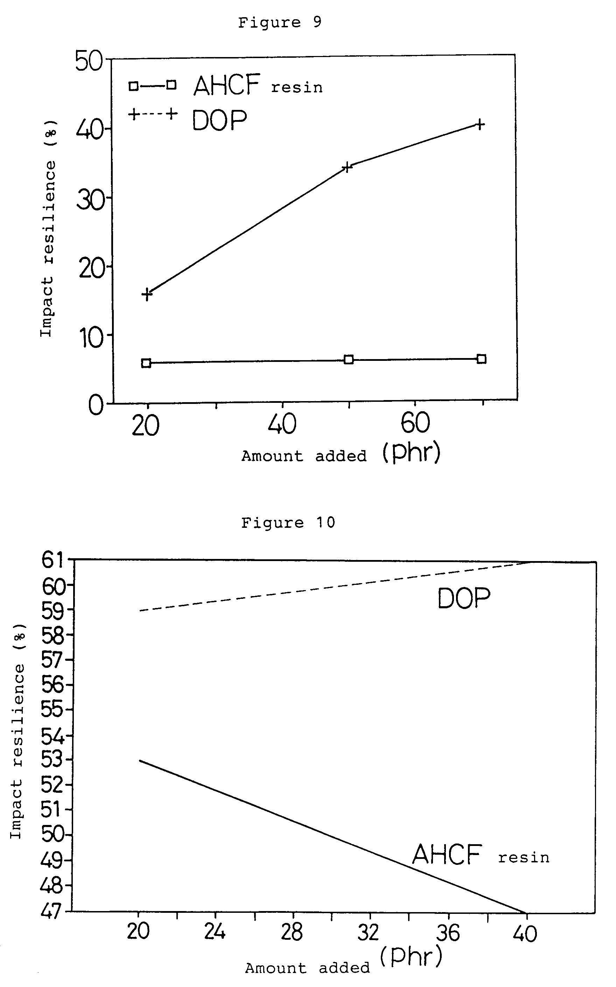

The test results obtained in Example 3 and Comparative Example 3, as well as the vulcanizing conditions employed, are shown in Table 4. Figure 9 shows the impact resilience of the composition in relation to the amount of the AHCF resin, or DOP added.

The results shown in Table 4 and Figure 9 confirm the improved performance of the rubber compositions of this invention containing the AHCF resin which showed a reduction of impact resilience with an increase of their AHCF resin contents.

Example 4 (Table 5: Examples 4-1 and 4-2):

The AHCF resin a and other additives were added to CR in the proportions shown in Table 5, and they were mixed in a mixer to prepare a composition. The composition was formed into a sheet, and vulcanized to make a molded high-hysteresis loss rubber product. The physical properties thereof were examined in accordance with JIS K 6301.

Comparative Example 4 (Table 5: Comparative Examples 4-1 and 4-2):

Example 4 was repeated, except that DOP was substituted for the AHCF resin a.

The test results obtained in Example 4 and Comparative Example 4, as well as the vulcanizing conditions employed, are shown in Table 5. Figure 10 shows the impact resilience of the compositions in relation to the amount of the AHCF resin, or DOP added.

The results shown in Table 5 and Figure 10 confirm the improved performance of the rubber compositions of this invention containing the AHCF resin which showed a reduction of impact resilience with an increase of their AHCF resin contents.

**Claims**

1.  A high-hysteresis loss rubber composition which comprises a rubber component, and an aromatic hydrocarbon-formaldehyde resin having a number-average molecular weight of 250 to 700.

2.  A rubber composition as set forth in claim 1, wherein at least a part of said rubber component consists of a synthetic rubber of high polarity.

3.  A rubber composition as set forth in claim 1 or 2, wherein at least a part of said rubber component is a material selected from the group consisting of acrylonitrile-butadiene rubber, a mixture of acrylonitrile-butadiene rubber and polyvinyl chloride, halogenated butyl rubber and chloroprene rubber.

Figure 1

Figure 2

Figure 3

Figure 4

Figure 5

Figure 6

Figure 7

Figure 8

Figure 9

Figure 10

International application No.

PCT/JP92/01641

**A. CLASSIFICATION OF SUBJECT MATTER**

Int. Cl$^5$  C08L21/00, C08L61/18, F16F7/00

According to International Patent Classification (IPC) or to both national classification and IPC

**B. FIELDS SEARCHED**

Minimum documentation searched (classification system followed by classification symbols)

Int. Cl$^5$  C08L21/00, C08L61/18, F16F7/00

Documentation searched other than minimum documentation to the extent that such documents are included in the fields searched

| | |
|---|---|
| Jitsuyo Shinan Koho | 1926 - 1993 |
| Kokai Jitsuyo Shinan Koho | 1971 - 1993 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP, A, 63-256670 (Mitsubishi Oil Co., Ltd.), October 24, 1988 (24. 10. 88), Lines 4 to 15, lower left column, page 1, line 6, upper left column to line 3, lower left column, page 3, lines 8 to 13, upper right column, pager 4 (Family: none) | 1-3 |
| X | JP, A, 63-286447 (Mitsubishi Oil Co., Ltd.), November 24, 1988 (24. 11. 88), Lines 4 to 16, lower left column, page 1, line 5, upper left column to line 20, upper right column, page 3, lines 5 to 10, upper right column, page 4 (Family: none) | 1-3 |
| X | JP, A, 3-146564 (Toyoda Gosei Co., Ltd.), June 21, 1991 (21. 06. 91), Lines 4 to 10, lower left column, page 1, lines 20, upper left column to line 9, lower left column, page 2 | 1-3 |

☒ Further documents are listed in the continuation of Box C.  ☐ See patent family annex.

| | | |
|---|---|---|
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "E" | earlier document but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | |
| "O" | document referring to an oral disclosure, use, exhibition or other means | "Y" document of particular relevance; the claimed invention cannot be considered to involve an inventive step when the document is combined with one or more other such documents, such combination being obvious to a person skilled in the art |
| "P" | document published prior to the international filing date but later than the priority date claimed | "&" document member of the same patent family |

| Date of the actual completion of the international search | Date of mailing of the international search report |
|---|---|
| March 10, 1993 (10. 03. 93) | April 6, 1993 (06. 04. 93) |

| Name and mailing address of the ISA/ | Authorized officer |
|---|---|
| Japanese Patent Office | |
| Facsimile No. | Telephone No. |

Form PCT/ISA/210 (second sheet) (July 1992)

International application No.

PCT/JP92/01641

C (Continuation). DOCUMENTS CONSIDERED TO BE RELEVANT

| Category* | Citation of document, with indication, where appropriate, of the relevant passages | Relevant to claim No. |
|---|---|---|
|  | (Family: none) |  |
| X | JP, B1, 43-27491 (Sun Star Dentifrice Co., Ltd.), November 27, 1968 (27. 11. 68), Line 4, right column, page 1 to line 10, left column, page 2 (Family: none) | 1-2 |

Form PCT/ISA/210 (continuation of second sheet) (July 1992)